# EUROPEAN PATENT APPLICATION

(11) **EP 0 714 925 A2**
(43) Date of publication of application: **05.06.1996**
(21) Application number: 95308431.6
(22) Date of filing: 24.11.1995
(51) Int. Cl.: C08G 63/695, C08G 63/672, C08G 63/78, C08G 63/91

(54) **Silyl group-containing organic polymers**

(30) Priority: 01.12.1994 GB 9424250
(71) Applicant: DOW CORNING S.A., B-7180 Seneffe (BE)
(72) Inventor: Habimana, Jean de la Croi, Barry, South Glamorgan CF61 1JZ, Wales (GB); Leempoel, Patrick, B-1180 Brussels (BE)
(74) Representative: Bullows, Michael

(57) **Abstract**

Polymers are prepared by condensation reaction between (A) the reaction product of a polyacid chloride (e.g. of the formula 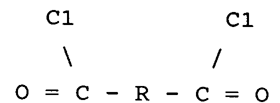
in which R represents -(CH₂)ₙ (where n has a value from 2 to 10) and an oxyalkylrene polymer having substituent groups condensible therewith (e.g. a polyoxyalkylene glycol) and (B) an organo-silicon compound having silicon-bonded groups of the general formula SiR(NHR¹)ₘNH₂.

The organosilicon compound is preferably gamma-aminopropyltrimethoxysilane or gamma-aminopropyltriethoxysilane.

Preferred polymers may be used in preparation of moisture curable sealants.

## Description

This invention is concerned with silyl group containing organic polymers.

It is known to provide polymers with terminal groups containing a silicon atom and silicon-bonded hydrolysable groups through which curing reaction may be induced.

Numerous methods of preparing such polymers by introducing hydrolysable silyl groups into the molecular chain have been proposed in the literature. For example, a silane having silicon-bonded hydrolysable groups X and a silicon-bonded hydrogen atom of the general formula X_{(3-b)}R_{b}SiH may be reacted with a polyether having groups including a -C=C- bond. There may be one or more -C=C- bonds present in the polyether molecule and these may be located as terminal groups on the chain or as pendant groups. In the case where there is one terminal -C=C- group, the other terminal group or groups may be hydroxyl. Materials of this general type have been mentioned in several patent specifications of which the earliest known to the applicant is G.B. 1 058 385. G.B. 1 058 385 specifies various organic groups which may provide the hydrolysable group corresponding to X in the above formula, namely hydrocarbonoxy, halohydrocarbonoxy, acyloxy, halogenated acyloxy, primary, secondary or tertiary amino groups in which the substituents are hydrocarbon or halo-hydrocarbon radicals or a diorgano-substituted isocyanoxy group of the general formula RₓR_{y}C=N-O- in which Rₓ and R_{y} are the same or different and are each a hydrocarbon or halohydrocarbon group. Numerous subsequent proposals for materials and methods of making them have been described in the art. These proposals include methods of preparing organic polymers by introducing hydrolysable silyl groups into the molecular chain which include, for example, those in which (1) a monomer having an epoxy group and a silicon containing hydrolysable group e.g. γ-glycidoxypropylmethyldimethoxysilane or γ-glycidoxypropyltrimethoxysilane is co-polymerised with an alkylene oxide e.g. propylene oxide or ethylene oxide to produce a polyether having a hydrolysable silicon containing group in the side chains; (2) a polyoxyalkylene glycol such as polyoxypropylene polyol or polytetramethylene diol is reacted with a compound having a functional group e.g. an isocyanato group, capable of reacting with a hydroxyl group of the polyoxyalkylene polyol and having a silicon-containing hydrolysable group, thereby introducing a hydrolysable silicon containing group into the polymer chain end, and (3) a polyisocyanate compound is reacted with a hydroxyl group of a polyoxyalkylene polyol as in (2) to produce a compound having an isocyanato group and the produced compound reacted with a compound having both a silicon-containing hydrolysable group and a group capable of reacting with the isocyanato group such as a carboxyl, hydroxyl, mercapto or amino group, thereby introducing a hydrolysable silicon-containing group into the polymer chain end.

Prior art methods of preparing modified polyethers of which applicant is aware generally employ energy intensive processes or a plethora of raw materials or operating steps in order to produce polymer with at least one silicon-containing group. See, for example, E.P. 159 605, U.S. 4,873,272, U.S. 4,847,357 and U.S. 4,786,667.

Those prior art processes which rely on a hydrosilylation reaction require use of a noble metal catalyst e.g. a platinum derivative. The platinum catalysts employed are comparatively expensive, so that the processes are comparatively costly.

It is one object of the present invention to provide an improved process for preparing silyl group containing organic polymers.

The present invention provides in one of its aspects a process for preparing a silyl group containing polyether which comprises bringing about a condensation reaction between (A) a polymer having repeating oxyalkylene units prepared by reacting an alkyl polyacid chloride and an oxyalkylene polymer having substituent groups condensible therewith under conditions such that the polymer (A) produced contains both chain extending units and chain terminating units derived from the polyacid chloride and (B) an organosilicon compound having at least one silicon-bonded amino group -R(NHR¹)ₘNH₂ wherein each R may be the same or different and represents a linking group, each R¹ represents a monovalent hydrocarbon group and m has a value from 0 to 10.

A polymer prepared according to the invention requires use of a reaction product (A) having COCl, i.e. acyl chloride groups. The condensation with the amino-organosilicon compound (B) is preferably carried out in the liquid phase either with the materials in solution or more preferably using a polymer which is liquid at the temperature of reaction. Thus, we prefer to employ a reaction product (A) having a molecular weight of less than 200,000 and when making polymers for use in sealants, adhesives or coatings we prefer to use a reaction product having a molecular weight of from about 500 to about 100,000. Suitable reaction products may be formed by condensing a poly-acid chloride with an organic polymer having repeating oxyalkylene units having substituent groups condensible therewith, for example hydroxyl, mercapto or amino groups. Organic polymers having suitable substituent groups are available in commerce and include those having oxyethylene, oxypropylene, and/or oxybutylene units. These materials may be linear or branched and may have one, two, three or more condensible substituents per molecule. We prefer to employ the linear α,ω dihydroxyl materials.

Poly-acid chlorides which may be used to form the required reaction product (A) have two or more acid chloride groups, for example oxalyl, malonyl, glutaryl, adipoyl, phthalyl, terephthalyl and isophthalyl chlorides. We prefer to employ an α,ω diacid chloride of a saturated aliphatic dicarboxylic acid of the formula 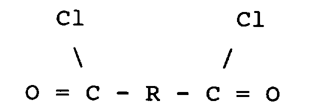 in which R represents a divalent hydrocarbon group and is preferably -(CH₂)ₙ- where n has a value from 0 to 10, more preferably from 3 to 5 as exemplified by glutaryl dichloride and adipoyl dichloride ( n = 3 or n = 4). These poly-acid chlorides serve to link polymer chains of the organic polymer as well as to provide the condensible COCl groups. The chain extension reaction, forming an ester linkage between oxyalkylene chains, is favoured when the ratio of chlorine of the acid chloride to substituent groups of the organic polymer condensible therewith is close to 1 whereas the reaction to produce the groups O=C.(Cl)-R-C(O)O- attached to the polymer is favoured when the ratio is greater than 1. Thus, in preparing the reaction product (A) having the acid chloride group, one may and preferably does include an initial step of chain extending a comparatively short chain polymer to the desired extent by reacting the poly-acid chloride and polymer having substituent groups condensible therewith in proportions such that the ratio of chlorine of the acid chloride to substituent groups of the organic polymer condensible therewith permits a desired proportion of chain extension.

We prefer to use the commonly available hydroxyl terminated polyoxy-propylenes and polyoxyethyleneoxy-propylenes having chain units -(CH₂-CH₂-O)ₚ- and -(CH.CH₃-CH₂-O)_{q}- where p has a value from 0 to about 100 and q has a value from 1 to 300 and having a molecular weight in the range of about 57 to 4,000 (preferably 2,000 to 4,000) to provide a basis for the desired reaction product (A) of appropriate molecular weight and to react these with the preferred poly-acid chloride in proportions such that the ratio of chlorine of the acid chloride to hydroxyl groups of the organic polymer is not less than 1 for example up to 1.25. We prefer to eliminate the condensation product e.g. HCl formed during this reaction for example by simple separation or by addition of a base e.g. an amine.

Preparation of the polymer according to the invention requires an organosilicon compound (B) having at least one silicon-bonded group -R(NHR¹)ₘNH₂. The organosilicon compound (B) may be a silane or a siloxane and may be according to the general formula (R')₃SiR(NHR¹)ₘNH₂ where each R represents the same or different linking group, each R' represents the same or different group R(NHR¹)ₘNH₂, a group R'', a group R¹ or a group (R')₃Si(OSiR¹₂)ₛ-O- where R'' represents a hydrolysable group, R¹ represents a monovalent hydrocarbon group, m has a value from 0 to 10 and s has a value from 0 to 1500. The aminosilicon compound (B) may have one, two, three or more groups R(NHR¹)ₘNH₂ but preferably has one or two such groups and most preferably has a single such group. The linking group R may be any divalent group which does not adversely affect the reaction. We prefer to use an aminosilicon compound in which the linking group is a group -(CH₂)ₙ- where n has a value from 2 to 10, more preferably from 3 to 5 as exemplified by propyl. The aminosilicon compounds in which m is 0 are generally preferred in order to avoid proliferation of side reactions between secondary amino groups and other groups present during the reaction. The remaining groups R' may be monovalent hydrocarbon groups, hydrolysable groups or groups (R'')₃Si(OSiR¹₂)ₙ-O-. When preparing materials intended for use in moisture curable compositions, we prefer to use aminosilicon compounds in which one, two or three of the R' groups are hydrolysable groups. Monovalent hydrocarbon groups R¹ present may be selected from, for example, the group consisting of alkyl groups, for example methyl, ethyl or propyl, alkenyl groups, for example vinyl, allyl or hexenyl, aryl groups, for example phenyl or aralkyl groups, for example cyclo-hexenyl. The hydrolysable groups R" may be selected from, for example, the group consisting of oximo, alkoxy (including alkoxy-alkoxy), acetoxy or alkenyloxy groups.

Preferred organosilicon compounds (B) are the silanes, typical examples of which are aminopropyltrimethoxysilane, aminopropyltriethoxysilane, aminopropylmethyldiethoxysilane, aminoethyltrimethoxysilane, aminomethyltrimethoxysilane and aminopropylmethyldiethoxysilane.

Polymers according to the invention are made according to the scheme 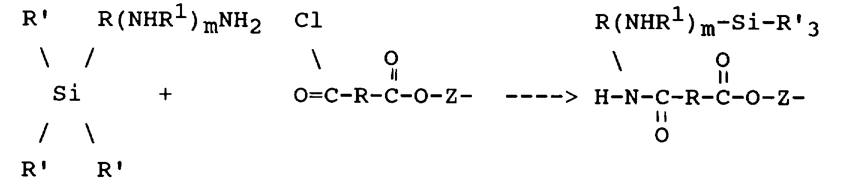 and have silyl groups bonded to the organic chain through amide linkages which are somewhat resistant to hydrolysis. The condensation reaction between the amino and acid chloride groups may be brought about within a period of from 1 minute to 5 hours by heating the reaction mixture to a temperature in the range 25°C to 150°C. Preferred materials are of the general formula 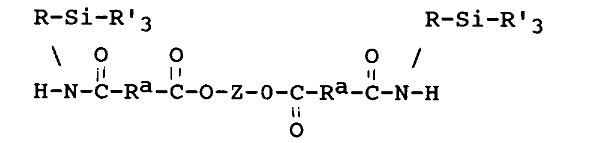 where R and R' are as aforesaid and Z represents ([(Eo)ₚ(Po)_{q}]-CO-R^{a}-CO-O-[(Eo)ₚ(Po)_{q}])ᵣ where R^{a} represents - (CH₂)ₙ-, Eo represents -CH₂-CH₂-O-, Po represents -CH.CH₃-CH₂-O-, n, p and q are as aforesaid and r represents an integer such that the molecular weight of Z is up to about 4,000.

Polymers can be produced according to the invention simply and without use of platinum catalyst. Polymers produced according to the invention find use in many applications e.g. as coatings adhesives and sealants. Those containing one or more alkenyl groups R' may be caused to undergo further reaction by a hydrosilylation reaction in similar fashion to the alkenyl group containing polysiloxanes whereas those containing hydrolysable groups R' may be caused to undergo condensation reaction in similar fashion to the alkoxy, acetoxy and oximo terminated polysiloxanes. Preferred polymers according to the invention are formed from oxyalkylene polymers of well defined chain length and have at least one silyl end group having one, two or three silicon-bonded hydrolysable groups. The polymers may be compounded or used for similar purposes to other curable organic or silicone polymers. For example, a moisture curable composition may be formulated using acetoxy, oximo or alkoxy silyl terminated polymer.

The following examples in which the parts and percentages are expressed by weight and viscosity measurements at 25°C are recited have been selected to illustrate the invention. Skin overtime (SOT) was assessed by a finger test and tack free time (TFT) was determined by a peel test using a film pressed onto a bead of composition.

### Example 1

Chain extension as a function of (Cl)/(OH) ratio.

10 parts of polypropylene glycol (PPO), (MW=2000) were introduced into 100ml bottles and glutaryl dichloride (GD) added in amounts as shown in Table 1. The reaction mixtures were allowed to react for 2 hours at 120°C under room pressure conditions. Higher chain extension, as indicated from measurement of the viscosity of the product, was obtained when the (Cl)/(OH) ratio was close to 1. Ratios of below 1 are used in order to produce hydroxy endblocked polymer and ratios greater than 1 are used to produce an acid chloride endblocked polymer.

**TABLE 1**

| | PPO | GD | | Viscosities |
|---|---|---|---|---|
| Number | Parts | Parts | (Cl)/(OH) | cSt |
| 1 | 10 | 0.31 | 0.39 | 1250 |
| 2 | 10 | 0.40 | 0.50 | 2220 |
| 3 | 10 | 0.51 | 0.64 | 4760 |
| 4 | 10 | 0.60 | 0.76 | 9900 |
| 5 | 10 | 0.69 | 0.86 | 37860 |
| 6 | 10 | 0.79 | 0.99 | 369600 |
| 7 | 10 | 0.91 | 1.15 | 210180 |
| 8 | 10 | 1.00 | 1.26 | 35150 |
| 9 | 10 | 1.10 | 1.18 | 16300 |
| 10 | 10 | 1.20 | 1.50 | 9500 |

### Example 2

Non-stabilised dialkoxysilane end-capped polymer.

100 parts polypropylene glycol (PPO) (MW=2000) were introduced into a 250ml reaction flask and dried for 1 hour under vacuum at 120°C. 10 parts glutaryl dichloride was then injected and allowed to react for 4 hours at 120°C under vacuum. Hydrogen chloride resulting from the reaction was trapped in a 0.984N KOH solution. Polymer samples were taken as a function of time. Viscosities, MW (i.e. molecular weight measured by GPC) and polydispersity (MWD) (i.e. molecular weight distribution) were measured and the results are shown in Table 2. After 4 hours 1 part γ-aminopropyl methyldiethoxysilane was injected and allowed to react for 1 hour. The polymer obtained displayed a mono-modal molecular weight distribution indicating that the starting polyglycol had been consumed. The final polymer cured rapidly without any condensation catalyst when exposed to atmospheric moisture. The final polymer is believed to be α,ω-bis methyldiethoxy silyl propyl N-amido glutarate polypropylene glycol/glutarate chloride copolymer. The self-curing was probably catalysed by hydrogen chloride present in the reaction medium after the chain extension and the end-capping reactions.

**TABLE 2**

| Viscosity, molecular weight and molecular weight distribution as a function of time. | | | |
|---|---|---|---|
| Time (minutes) | Viscosity (cSt) | MW | MWD |
| 0 | 367 | 2100 | 1.32 |
| 60 | 50600 | 28000 | 3.59 |
| 120 | 55800 | 28400 | 3.77 |
| 180 | 55800 | 28400 | 3.70 |
| 225 | 57800 | 28100 | 3.95 |
| 960 | 85000 | 31600 | 3.63 |

### Example 3

Evidence of amide functions.

Equimolar amounts of acetyl chloride and aminopropyltriethoxysilane were introduced to a reaction flask and allowed to react at room temperature in ethylene glycol dimethyl ether as solvent and trihexylamine to trap hydrogen chloride resulting from the reaction. The product of the reaction was obtained after 10 seconds and was identified by gas chromatography/mass spectra (CG/NS) as

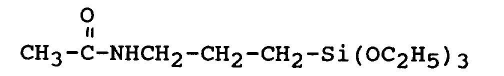

### Example 4

Trihexylamine stabilised trialkoxysilane end-capped-polymer.

Equimolar amounts of PPO and GD were introduced into duplicate reaction flasks and allowed to react for 2 hours under vacuum at 120°C to a viscosity of about 13000 cSt and then end-capped with aminopropylmethyldiethoxy-silane/trihexylamine (APDS/THA) mixture. Stoichiometric excess of trihexylamine was used in the mixture. Both polymers were stable when exposed to atmospheric moisture. Two sealant formulations were prepared using the two polymers by admixing them in proportions shown in Table 3 with organic plasticiser (dioctylphthalate - DOP) finely divided filler (precipitated calcium carbonate and titanium dioxide) curative (methyltrimethoxysilane - MTM) and catalyst (dibutyltin dilaurate - DBTL). Samples of the sealant formulations demonstrated physical properties as shown in Table 3.

The tensile strength, elongation at break and modulus at 100% extension were measured according to ASTM D412 using cured strips or slabs of the compositions. The time in minutes which elapsed between application of the bead to the substrate and development of a non-tacky surface on the bead was noted as the skin over time (SOT).

**TABLE 3**

| Polymer Formulation | | |
|---|---|---|
| Ingredient | Polymer Composition | |
| | 1 | 2 |
| | Parts | Parts |
| PPO | 50 | 50 |
| GD | 5.6 | 5.6 |
| Viscosity (2h) cSt | 13300 | 12400 |
| APDS * | 3.3 | 3.2 |
| THA * | 9.2 | 13.9 |

| Sealant Formulation | | |
|---|---|---|
| | Sealant Composition | |
| | 1 | 2 |
| | Parts | Parts |
| Polymer 1 | 25 | |
| Polymer 2 | | 27.5 |
| DOP | 10 | 10 |
| CaCO₃ (Precipitated) | 14 | 14 |
| TiO₂ | 4 | 4 |
| MTM | 0.8 | 0.8 |
| DBTDL | 0.2 | 0.2 |

| Physical Properties | | |
|---|---|---|
| SOT (hours) | >15 | >15 |
| Tensile (MPa) | 0.77 | 0.55 |
| Mod (100%) | 0.27 | 0.21 |
| EB % | 280 | 224 |

| | | |
|---|---|---|
| * APDS and THA are adjusted as a function of remaining polymer after the viscosity samples are taken out. | | |

### Example 5

Stabilisation with triisooctylamine.

Using similar reaction conditions as in Example 4, but using only 25g of starting PPO and adding triisooctylamine (TIOA) instead of trihexylamine, the polymer prepared was also stable under ambient humidity conditions. The TIOA/HC1 salt precipitated very slowly in the polymer and was easily filtered. The proportion of TIOA for a stable polymer varied with the hydrogen chloride quantity present in the polymer.

| Polymer Formulations | Parts |
|---|---|
| Number | 3 |
| PPO | 25 |
| GD | 2.8 |
| APDS | 1.63 |
| TIOA | 2.28 |
| TIOA/APDS | 0.75 |
| 3h viscosity | 13700 |
| Cure test | Stable |

### Example 6

High molecular weight polypropylene blocks.

Using similar reaction conditions as in Example 5, except that PPO (MW=2000) was replaced by PPO2, polyoxy-propyleneglycol of MW=4000, with an adjustment of the glutaryl dichloride level in order to have a similar C1/OH ratio as in Example 5 but stabilised by tributylamine and that the silane end-capping reaction time was 3 hours, a high functional polymer, moisture curable at room temperature in presence of DBTDL was obtained.

| Polymer process | |
|---|---|
| PPO2 (MW=4000, OH Index : 17.8 mg/g) : | 3525 parts |
| Glutaryl dichloride : | 206 parts |
| Chain extension reaction time : | 3 hours |
| Aminopropyltriethoxysilane : | 163 parts |
| Tributylamine : | 207 parts |
| Silane end-capping reaction time | 3 hours |

Physical properties were tested 7 days after application and room temperature cure of the composition to form test samples.

| | |
|---|---|
| Modulus 100% (MPa) : | 0,7 |
| Elongation at break % : | 686 |
| Tensile (MPa) : | 3,6 |

### Example 7

123.4 parts adipoyl chloride were added and allowed to react with 4000 parts polypropylene glycol PPO2 during 2 hours at 120°C under reduced nitrogen pressure (10mbar) to give a product of 16,300 cSt viscosity (Mw = 12,500). Another 123.4 parts of adipoyl chloride were added and allowed to react with the mixture under the same conditions but during 1 hour only to give an acid chloride polymer of 160,000 cSt viscosity and 12,500 molecular weight (Mw). Hydrogen chloride resulting from the reaction was trapped in 1 litre of 0.984N KOH solution. A quantity of 40 parts of the acid chloride polymer so prepared was then mixed in a dental mixer with aminopropyltrimethoxysilane (AMMO), methyltrimethoxysilane (MTM) and dibutyltidilaurate (DBTDA) in the proportions illustrated in the following Table. Cure characteristics of the compositions were determined in terms of SOT, TFT, surface tackiness. Mechanical resistance (as tensile), elongation at break and modulus are also reported in the Table. As in Example 4 above SOT (skin over time) was assessed by a finger test and TFT (tack free time) was determined by a peel test using a film pressed onto the bead. Tackiness of the cured sealant was determined by finger testing the cured composition and estimating its surface tack on the scale 0 to 4 with 0 being the most tacky and 4 the least tacky.

| SAMPLES | 1 | 2 | 3 | 4 | |
|---|---|---|---|---|---|
| Ammo | 3 | 3 | 1.6 | 1.6 | |
| MTM | 1.6 | 0.8 | 1.6 | 0.8 | |
| DBTDA | 1.2 | 0.6 | 0.6 | 1.2 | |
| SOT | 19' | 2' | 1h07' | 33' | |
| TFT | 1h02' | 3' | 5h01' | 2h18' | |
| Tackiness | 4 | 3 | 2 | 1 | |
| Tensile | | 1.22 | 0.53 | | |
| Elongation | | 423 | 408 | 355 | |
| Modulus | | | 0.20 | 0.15 | 0.15 |

| SAMPLES | 5 | 6 | 7 |
|---|---|---|---|
| Ammo | 3 | 3 | 3 |
| MTM | 1.6 | 1.6 | 1.6 |
| DBTD | 1.2 | 1.2 | 1.2 |
| SOT | 8' | 5' | 15' |
| TFT | 18' | 12' | 25' |
| Tackiness | 4 | 4 | 4 |
| Tensile | 0.99 | 0.96 | 1.22 |
| Elongation | 333 | 333 | 370 |
| Modulus | 0.25 | 0.25 | 0.23 |

### Example 8

The procedure of Example 7 was followed to produce (a) a hydroxy endcapped polymer having a viscosity of 15,200 cSt and (b) a chloride polymer of 270,000 cSt (Mw = 18,500) at the end of both steps of adipoyl chloride addition. A quantity of 1000 parts of this chloride polymer (b) was introduced to a 5 litre Spangenberg mixer and mixed under vaccuum with 40 parts aminopropyltrimethoxysilane, 40 parts methyltrimethoxysilane, 500 parts dibutylphthalate (DPB) during respectively 30 minutes and twice 2 minutes. Treated precipitated calcium carbonate was introduced in 2 steps of 600 parts each. The UV stabiliser TiO₂ was added with the second addition of carbonate and mixed for 10 minutes. The antioxidant Irganox 1520 and the catalyst tin octoate were added and homogenised in the composition for 20 minutes. Lauryl amine (15.2g) and octanoic acid (15.2g) were introduced at the end and mixed for 5 minutes. Cure characteristics of the sealant tested in terms of SOT and TFT were respectively of 85 and 95 minutes.

## Claims

1. A process for preparing a silyl group containing polyether which comprises bringing about a condensation reaction between (A) a polymer having repeating oxyalkylene units prepared by reacting an alkyl polyacid chloride and a oxyalkylene polymer having substituent groups condensible therewith under conditions such that the polymer (A) produced contains both chain extending units and chain terminating units derived from the polyacid chloride and (B) an organosilicon compound having at least one silicon-bonded amino group -R(NHR¹)ₘNH₂ wherein each R may be the same or different and represents a linking group, each R¹ represents a monovalent hydrocarbon group and m has a value from 0 to 10.

2. A process according to Claim 1 wherein the oxyalkylene polymer used to prepare the polymer (A) is a linear α,ω-dihydroxy polyoxyalkylene glycol of molecular weight in the range 57 to 4,000 having chain units -(CH.CH₃-CH₂-O)_{q}- and-(CH₂-CH₂-O)ₚ- where p has a value of 0 to 100 and q has a value of 1 to 300.

3. A process according to Claim 1 wherein the polymer used to prepare the polymer (A) has a molecular weight in the range 500 to 100,000.

4. A process according to Claim 1 wherein the organosilicon compound (B) is a silane of the general formula (R')₃SiR(NHR¹)ₘNH₂ wherein each R' may be the same or different and represents a group R(NHR¹)ₘNH₂, a group R'', a group R¹ or a group R'Si(OSiR¹₂)ₛ-O- where R'' represents a hydrolysable group, R¹ represents a monovalent hydrocarbon group and s has a value of from 0 to 1500.

5. A process according to Claim 4 wherein R" represents alkoxy, oximo, alkenyloxy or alkyoxyalkoxy.

6. A process according to Claim 1 wherein the group -R(NHR¹)ₘNH₂ is aminopropyl.

7. A process according to Claim 6 wherein the aminosilicon compound (B) is selected from the group consisting of γ-aminopropyltrimethoxysilane and γ-aminopropyltriethoxysilane.

8. A process according to Claim 1 wherein the acid chloride comprises an α,ω-diacid chloride of a saturated aliphatic dicarboxylic acid of the formula 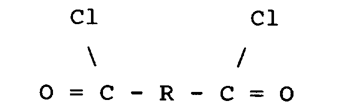 in which R represents -(CH₂)ₙ- where n has a value from 2 to 10.

9. A polymer according to the general formula 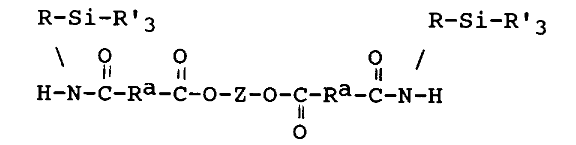 where R and R' are as aforesaid and Z represents ([(Eo)ₚ(Po)_{q}]-CO-O-R^{a}-CO-O-[(Eo)ₚ(Po)_{q}])ᵣ where R^{a} represents -(CH₂)ₙ-, Eo represents -CH₂-CH₂-O-, Po represents -CH.CH₃-CH₂-O and R, R', n, p and q are as aforesaid and r has a value such that the molecular weight of the polymer is up to about 4000.
